(19) Europäisches Patentamt
European Patent Office
Office européen des brevets

(11) Veröffentlichungsnummer: **0 433 489 A1**

(12) **EUROPÄISCHE PATENTANMELDUNG**

(21) Anmeldenummer: **89123780.2**

(51) Int. Cl.$^5$: **G06F 12/02**

(22) Anmeldetag: **22.12.89**

(43) Veröffentlichungstag der Anmeldung: **26.06.91 Patentblatt 91/26**

(84) Benannte Vertragsstaaten: **AT BE DE FR GB NL**

(71) Anmelder: **Siemens Aktiengesellschaft**
**Wittelsbacherplatz 2**
**W-8000 München 2(DE)**

(72) Erfinder: **Hafer, Christian, Dipl.-Ing.**
**Ottobrunnerstrasse 49**
**W-8000 München 83(DE)**
Erfinder: **Mohnberg, Andreas**
**Weissenburgstrasse 26**
**W-2300 Kiel 1(DE)**
Erfinder: **Graf, Manfred, Dipl.-Ing.**
**Reiserstrasse 11**
**W-8000 München 82(DE)**

(54) **Verfahren zur Bereinigung eines Speichers von Objekten, auf die während eines Programmlaufs nicht mehr zugegriffen werden kann.**

(57) Programme in Programmiersprachen mit dynamischer Speicherplatzzuweisung machen es erforderlich, daß von Zeit zu Zeit der Speicher von Objekten (z.B. Datenworte) bereinigt werden muß, auf die während des Programmlaufs nicht mehr zugegriffen werden kann. Objekte, die nicht mehr adressiert werden können (tote Objekte), werden dann dem System wieder zur Verfügung gestellt. Das Verfahren zur Bereinigung des Speichers teilt den Adreßraum in einen ersten Speicherbereich (NS) und einen zweiten Speicherbereich (OS) ein. Im ersten Speicherbereich werden in einem ersten Teilspeicher (CA) die neuen Objekte eingespeichert. Bei einer ersten Bereinigung werden die lebenden Objekte des ersten Teilspeichers (CA) in einen zweiten Teilspeicher (FSS) des ersten Speicherbereiches umkopiert, Nach der Bereinigung werden die im zweiten Teilspeicher (FSS) gesicherten lebenden Objekte in einen dritten Teilspeicher (PSS) umkopiert. Bei weiteren Bereinigungsverfahren werden lebende Objekte vom ersten Teilspeicher (CA) in den zweiten Teilspeicher (FSS) sichergestellt, lebende Objekte im dritten Teilspeicher (PSS) in dem zweiten Speicherbereich (OS) gesichert. Neu in dem zweiten Teilspeicher (FSS) gesicherte Objekte und neu in dem zweiten Speicherbereich gesicherte lebende Objekten werden abwechselnd solange untersucht, bis keine lebenden Objekte mehr gefunden werden. Anschließend werden die gesicherten Objekte im ersten Speicherbereich (NS) vom zweiten Teilspeicher (FSS) in den dritten Teilspeicher (PSS) umkopiert. Die Bereinigung des zweiten Speicherbereiches (OS) erfolgt nach dem Stop and Copy Verfahren.

FIG 4

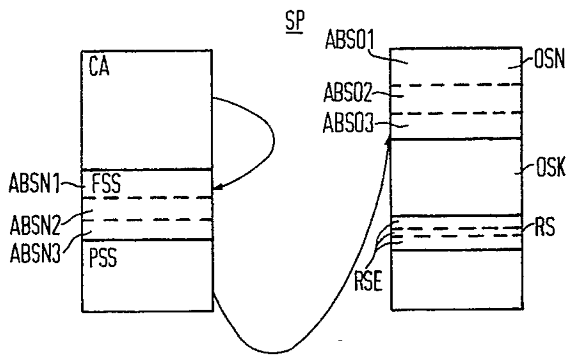


EP 0 433 489 A1

# VERFAHREN ZUR BEREINIGUNG EINES SPEICHERS VON OBJEKTEN, AUF DIE WÄHREND EINES PROGRAMMLAUFS NICHT MEHR ZUGEGRIFFEN WERDEN KANN

Die Erfindung bezieht sich auf ein Verfahren zur Bereinigung eines Speichers von Objekten, auf die während eines Programmlaufs nicht mehr zugegriffen werden kann.

Programmiersprachen wie LISP oder Smalltalk basieren auf dynamischer Speicherverwaltung. Zur Laufzeit der Programme werden Daten in den Speicher geschrieben, von denen ein großer Teil bereits nach kurzer Zeit nicht mehr erreichbar ist, da diese nicht mehr adressierbar sind. Die zugeordneten Adressen sind während eines Programmlaufs gelöscht worden. Da der zur Verfügung stehende Speicherraum begrenzt ist, ist es notwendig, nicht mehr verwendete Daten zu entfernen und deren Speicherplatz an das System zurückzugeben.

Zum Beispiel werden bei LISP Speicherbereiche dynamisch belegt, wenn sie gebraucht werden, etwa bei der Ausführung von konstruktiven Listenoperationen wie cons oder append. Sie werden nicht wie bei anderen Programmiersprachen schon beim Laden eines Programms fest reserviert. Datenbereiche, auf die nicht mehr zugegriffen wird, müssen allerdings wieder freigegeben werden, da sonst der Speicherplatz für ein größeres Programm schnell zu klein wird.

Im folgenden werden Datenworte oder Befehlsworte im Speicher als Objekte bezeichnet, wobei ein Objekt aus mehreren zusammengehörigen Datenworten bestehen kann.

Die Freigabe des Speichers für Objekte, die noch existent sind, aber anonym und unzugängig sind, wird Speicherbereini gung (Garbage Collection) genannt. Anhand eines Beispieles, das in Figur 1 dargestellt ist, wird die Problematik weiter erläutert. Das System nach Figur 1 besteht aus einem Prozessor PR und einem Speicher SP mit einem Adreßraum ADM. Der Prozessor enthält z.B. Register R1 bis R4. Im Speicher SP sind Objekte Do1 bis Do7 enthalten. Die einzelnen Objekte Do werden über Adressen angesprochen. Dazu ist erforderlich, daß die Adresse eines Objektes Do in einem Register R steht. Zum Beispiel steht die Adresse des Objektes Do1 im Register R1. Damit kann das Objekt Do1 vom Prozessor PR über das Register adressiert werden und bearbeitet werden. Das Objekt Do5 kann über die Register R2 und R3 adressiert werden. Auf die Objekte Do2 und Do3 kann der Prozessor mittelbar über das Register R1 und das Objekt Do1 zugreifen. Dazu ist notwendig, daß im Objekt Do1 die Adressen der Objekte Do2 und Do3 stehen. Auf die Objekte Do4, Do6 und Do7 kann der Prozessor dagegen nicht mehr zugreifen.

Die Objekte, auf die zugegriffen werden kann, werden im folgenden lebende Objekte bezeichnet, dies sind in Figur 1 Do1, Do2, Do3 und Do5. Die Objekte auf die nicht mehr zugegriffen werden kann, nämlich die Objekte Do4, Do6 und Do7 werden als tot oder unerreichbar bezeichnet.

Ziel der Speicherbereinigung ist es also, unerreichbare Objekte aus dem Speicher zu entfernen und den Speicherplatz der unerreichbaren Objekten dem System zurückzugeben.

Es sind bereits mehrere solche Speicherbereinigungsverfahren bekannt geworden, von denen das Copying-Garbage Collection (Stop-and-Copy) Verfahren beschrieben werden soll (Fenchiel, R.; Yochelson, J.: 1 LISP Garbage-Collector for Virtual Memory Computer Systems, CACM, Vol. 12, Nov. 69, No. 11, S. 611-612). Bei diesem Verfahren wird der Speicher SP in zwei gleich große Bereiche geteilt, in einen ersten Speicherbereich und einen zweiten Speicherbereich. Der erste Speicherbereich wird New Space NS, der zweite Speicherbereich Old Space OS genannt. Aus Figur 2 und 3 ergibt sich eine derartige Aufteilung des Speichers in NS und OS. Die neu erzeugten Objekte werden in dem ersten Speicherbereich NS abgelegt. Die Speicherbereinigung wird ausgelöst, wenn keine freien Speicherzellen mehr vorhanden sind. Dazu werden alle anderen Prozesse gestopt. Alle lebenden Objekte des ersten Speicherbereiches NS werden in einem Durchgang ermittelt und in den zweiten Speicherbereich OS kopiert. Die lebenden Objekte bei Figur 2 sind Do1 und Do2. Das Objekt Do1 kann direkt von den Registern R1 bzw. R2 adressiert werden, das Objekt Do2 über das Objekt Do1. Zunächst wird das Objekt Do1 in den zweiten Speicherbereich OS kopiert und dort als Objekt Do1′ bezeichnet (Fig.3). Gleichzeitig wird in das Objekt Do1 im ersten Speicherbereich NS ein sog. Vorwärtsverweis eingetragen und die Adresse des Objektes Do1′ im zweiten Speicherbereich als Vorwärtsadresse. Der Vorwärtsverweis gibt an, ob ein Objekt, z.B. Do1, bereits umkopiert worden ist, die Vorwärtsverweisadresse gibt an, wohin das Objekt kopiert worden ist. Der Vorwärtsverweis ist deswegen zweckmäßig, bei Adressierung desselben Datenobjektes, z.B. Do1, durch ein anderes Register, z.B. R2, dieses feststellt, daß das Objekt Do1 bereits in den zweiten Speicherbereich umkopiert worden ist. Zu dem werden in die Register R1 und R2 die Adresse des unkopierten Objektes Do1′ aufgenommen.

In einem zweiten Durchgang wird nun festgestellt, ob von einem Objekt, z.B. Dol, ein Verweis auf ein anderes Objekt, z.B. Do2, vorhanden ist. Ist dies der Fall, dann muß auch dieses Objekt Do2 in den zweiten Speicherbereich OS gerettet werden. Denn auch dieses Objekt Do2 ist ein lebendes Objekt, das mittelbar vom Prozessor adressiert werden kann. Dementsprechend muß die Vorwärtsverweisadresse im Objekt Do1′ so geändert werden, daß sie auf Do2′ zeigt. Sind alle lebenden Objekte in den zweiten Speicherbereich OS umkopiert wor den, dann werden die beiden Bereiche getauscht im ersten Speicherbereich NS stehen dann nur noch lebende Objekte Do, die restlichen Speicherplätze dagegen sind vom Prozessor wieder neu beschreibbar, dies ist in Figur 2 z.B. das Objekt Do3 und Do4.

Bei dem bekannten Speicherbereinigungsverfahren ist der Unterbrechungszeitraum für die Speicherbereinigung proportional zur Größe des Speichers. Das Verfahren ist für ein virtuelles Speichersystem geeignet, der Speicher wird vollständig bereinigt und auch kompaktifiziert, d.h. die lebenden Objekte sind nacheinander im Speicher angeordnet, allerdings ist der Speicher nur zur Hälfte nutzbar.

Eine Weiterentwicklung dieses Speicherbereinigungsverfahrens ist das Verfahren nach Ungar, Generation Scavenging, ACM SIGSOFT/SIGPLAN Practical Programming Environments Conf., S.157-167, April 1984). Mit diesem Verfahren wird berücksichtigt, daß jüngere Objekte mit einer größeren Wahrscheinlichkeit unerreichbar werden als ältere. Die Objekte werden in zwei Klassen eingestuft, in junge und alte Objekte, die unterschiedlich oft bereinigt werden. Dazu wird der Speicher wiederum in zwei Speicherbereiche NS und OS, jetzt unterschiedlicher Größe, eingeteilt. Der erste Speicherbereich NS wird weiter in drei Teilspeicher unterteilt, einen ersten Teilspeicher CA (Creation Area), einen zweiten Teilspeicher FSS (Future Survivor Space) und einen dritten Teilspeicher PSS (Past Survivor Space). Diese Einteilung ergibt sich z.B. aus Figur 4. Neu erzeugte Objekte werden in den ersten Teilspeicher CA abgelegt. Im dritten Teilspeicher PSS sind die Objekte abgelegt, die eine gewisse Zahl von Speicherbereinigungen überlebt haben. Im zweiten Speicherbereich OS sind Objekte abgelegt, die bereits eine große Anzahl von Bereinigungen überlebt haben. Die Zahl der Bereinigungen wird in reservierten Bits im Objekt festgehalten. In den zweiten Teilspeicher FSS werden die überlebenden Objekte aus dem ersten Teilspeicher und teilweise aus dem dritten Teilspeicher PSS kopiert. Objekte aus dem dritten Teilspeicher PSS, die ein gewisses Alter überschritten haben, das sich aus den reservierten Bits im Objekt ergibt, werden in den zweiten Speicherbereich OS kopiert. Sind alle lebenden Objekte des ersten Teilspeichers CA und des dritten Teilspeichers PSS kopiert, werden der zweite Teilspeicher FSS und der dritte Teilspeicher PSS getauscht. Der zweite Teilspeicher FSS ist also als Kopierraum für das Speicherbereinigungsverfahren vorgesehen. Der erste Teilspeicher CA wird wieder für neue Objekte freigegeen. Für Verweise von Objekten aus dem zweiten Speicherbereich OS auf Objekte im ersten Speicherbereich NS wird ein Erinnerungsspeicher (Remembered Set) verwendet, der pro Verweis aus dem zweiten Speicherbereich in den ersten Speicherbereich einen Eintrag enthält. Über diesen Erinnerungsspeicher ist es möglich, bei der Bereinigung des ersten Speicherbereiche NS die vom zweiten Speicherbereich adressierten Objekte zu erkennen und in den zweiten Teilspeicher FSS bzw. in den zweiten Speicherbereich OS zu retten.

Die der Erfindung zugrundeliegende Aufgabe besteht darin, die bekannten Verfahren weiter zu verbessern. Diese Aufgabe wird gemäß den im Patentanspruch 1 angegebenen Schritten gelöst.

Die Vorteile des Verfahrens sind darin zu sehen, daß zur Kennzeichnung des Alters eines Objektes keine Bits in den Objekten mehr verwendet werden müssen. Stattdessen werden verschiedene Speicherbereiche bzw. Teilspeicher definiert, die jeweils Objekte einer Altersstufe enthalten. In der Programmiersprache LISP können Listen und Arrays beliebig tief geschachtelt sein. Unabhängig davon benötigt das neue Kopierverfahren lediglich eine konstante Aufruftiefe, die statisch vorhersagbar und somit von den betrachteten Datenstrukturen unabhängig ist. Um rekursive Datenstrukturen mit konstanter Aufruftiefe mit dem Speicherbereinigungsverfahren bearbeiten zu können, werden zwei Maßnahmen getroffen: Der Speicher wird während der Speicherbereinigung kurz fristig weiterunterteilt, es werden kurzfristig temporäre Bereichsgrenzen in den Teilspeichern angeführt.

Bei zusammengesetzten Objekten, wie z.B. arrays, records bei LISP werden die Objekten mit einem modifizierten Kennzeichnungsbereich ausgestattet. Dieser modifizierte Kennzeichnungsbereich gibt nun an, aus wieviel Speicherworten ein Objekt besteht und zu welchem Typ das Objekt gehört.

Ein weiterer Vorteil ist darin zu sehen, daß kein zusätzlicher Hardware-Aufwand nötig ist.

Das Alter der Objekte, d.h. die Anzahl der Bereinigungen, die das Objekt überlebt hat, kann durch die Anzahl der verwendeten Teilspeicher und die Anzahl der Speicherbereiche festgelegt werden. Es ist jedoch auch möglich, daß im ersten Speicherbereich eine flexible Grenzadresse angeführt wird, oberhalb deren die Objekte in den zweiten Speicherbereich kopiert werden bzw. unterhalb deren die Objekte in den zweiten Teilspeicher kopiert werden.

Die gesicherten Objekte stehen in Breadth-first Anordnung im zweiten Teilspeicher, da zuerst die von äußeren Einheiten adressierten Objekte in den zweiten Teilspeicher kopiert werden und anschließend die von gesicherten Objekten unmittelbar adressierten Objekte im ersten Speicherbereich.

Weiterbildungen der Erfindung ergeben sich aus den Unteransprüchen.

Anhand von Ausführungsbeispielen, die in den Figuren dargestellt sind, wird die Erfindung weiter erläutert. Es zeigen

Figur 1 ein vereinfachtes Rechnermodell für die Erklärung des Speicherbereinigungsproblems,

Figur 2 und 3 eine Darstellung des Stop and Copy Verfahrens,

Figur 4 der Zustand des Speichers vor dem Bereinigungsverfahren und während des Bereinigungsverfahrens,

Figur 5 der Zustand des Speichers nach dem Bereinigungsverfahren,

Figur 6 der Zustand des Speichers während eines Speicherbereinigungsverfahrens, wenn mit einer flexiblen Grenzadresse gearbeitet wird,

Figur 7 der Zustand des Speichers nach Figur 6 nach dem Speicherbereinigungsverfahren,

Figur 8 die Anordnung der Speicherbereiche mit Teilspeichern in einem Speicher,

Figur 9 den Aufbau eines Speicherwortes,

Figur 10 ein Ablaufdiagramm der ersten Phase des Speicherbereinigungsverfahrens mit Registern oder einem Stack-Speicher als adressierende Einheit,

Figur 11 ein Ablaufdiagramm der ersten Phase, wenn der Erinnerungsspeicher adressierende Einheit ist,

Figur 12 ein Ablaufdiagramm der zweiten Phase der Bereinigung, in dem die Adressierung eines Objektes von einem im ersten Speicherbereich liegenden Objekt erfolgt,

Figur 13 die zweite Phase der Speicherbereinigung, wenn die Adressierung eines Objektes im ersten Speicherbereich von einem Objekt im zweiten Speicherbereich aus erfolgt.

Im folgenden wird ein erstes Ausführungsbeispiel des Verfahrens unter Zuhilfenahme von Figur 4 und Figur 5 erläutert.

In einer Startphase kann in einem Teilspeicher des Speichers festgelegt werden, in welchen Bereichen die Speicherbereiche NS und OS bzw. die in Figur 4 und 5 angegebenen Teilspeicher angeordnet sind. Dazu können die Startadresse und die Endadresse der jeweiligen Teilspeicher bzw. der Speicherbereiche eingetragen werden. Im Beispiel der Figur 8 kann z.B. im Teilspeicher ORG die Anfangsadressen und Endeadressen der jeweiligen Speicherbereiche NS, OS bzw. der einzelnen Teilspeicher CA, FSS, PSS, OSN, OSK eingetragen sein.

Wenn der Teilspeicher CA im ersten Speicherbereich NS mit Objekten Do beschrieben ist und es soll ein neues Objekt Do in den ersten Speicherbereich NS eingeschrieben werden, dann muß vorher eine Speicherbereinigung durchgeführt werden. Diese Speicherbereinigung hat das Ziel, lebende Objekte im ersten Speicherbereich NS zu sichern, die Speicherplätze der toten Objekte dagegen wieder dem System freizugeben.

In einer ersten Phase werden nun die Objekte im ersten Speicherbereich NS festgestellt, die von außerhalb des Speichers adressiert werden. Die Einheiten, von denen diese Adressierung ausgeht, können z.B. Register im Prozessor sein, können ein Stack-Speicher sein, der in einem Registersatz angeordnet oder in einem anderen Teil des Speichers und kann der Erinnerungsspeicher sein, in dem Einträge enthalten sind für diejenigen Objekte im zweiten Speicherbereich OS, die einen Verweis auf ein Objekt im ersten Speicherbereich NS enthalten.

Mit Hilfe des Ablaufdiagramms der Figur 10 wird zunächst erläutert, wie die Ermittlung von lebenden Objekten im ersten Speicherbereich ausgeführt wird, wenn auf die Objekte im ersten Speicherbereich von außen direkt zugegriffen wird, z.B. von Registern R. In einem Schritt A1 wird untersucht, ob in einem Register R die Adresse ADN eines Datenobjektes Do im ersten Speicherbereich NS enthalten ist. Über diese Adresse kann dann das entsprechende Objekt im ersten Speicherbereich adressiert werden und bearbeitet werden. Ergibt die Überprüfung, daß im Register R eine solche Adresse ADN enthalten ist, dann wird in einem zweiten Schritt A2 untersucht, ob das Datenobjekt Do einen Vorwärtsverweis VW enthält. Ein Vorwärtsverweis VW liegt in einem Objekt Do vor, wenn auf dieses Objekt bereits vorher zugegriffen worden ist und dieses zur Sicherung in den zweiten Teilspeicher FSS umkopiert worden ist. In diesem Falle enthält das Objekt Do auch eine Vorwärtsverweisadresse VWA. Zur Erläuterung sei auf die Figur 9 hingewiesen, in der ein Speicherwort SW dargestellt ist. Das Speicherwort SW besteht aus einem Datenteil Data, z.B. 27 Bits und einem Kennzeichenteil TAG, z.B. 4 Bits. Wenn ein Objket Do zur Sicherung umkopiert wird, dann wird in den Kennzeichenteil TAG ein Vorwärtsverweis VW eingetragen und in den Datenteil DATA die Vorwärtsverweisadresse VWA. Bei jedem späteren Zugriff auf dieses Objekt kann dann die zugreifende Einheit feststellen, wohin dieses Objekt kopiert worden ist und die entsprechende Vorwärtsverweisadresse VWA übernehmen. Wenn der Schritt A2 ergibt, daß das adressierte Objekt einen Vorwärtsverweis VW enthält, dann wird die dort gespeicherte Vorwärtsverweisadresse VWA in das adressierende Register eingeschrieben. Dies geschieht im Schritt A6.

Enthält das Objekt Do jedoch keinen Vorwärtsverweis VW, dann muß in einem Schritt A3 untersucht werden, ob das Objekt Do alt genug ist, d.h. eine vorgegebene Anzahl von Bereinigungen bereits überlebt hat. Wenn dies nicht der Fall ist, dann wird das Objekt aus dem ersten Speicherbereich in den zweiten Teilspeicher FSS unter der Adresse AD umkopiert, und zwar in einen neuen Abschnitt ABSN. Gleichzeitig wird ein Vorwärtsverweis VW in das Objekt eingeschrieben unter der Adresse ADN und die Vorwärtsverweisadresse VWA, die AD ist. Zu dem wird in das Register R die Adresse AD eingeschrieben. Wenn gemäß Figur 4 Objekte im ersten Teilspeicher CA liegen, das sind dann junge Objekte, dann werden diese, wenn sie leben, im zweiten Teilspeicher FSS in dem ersten Abschnitt ABSN1 abgespeichert. Gleichzeitig wird das Objekt im ersten Teilspeicher CA unter der Adresse ADN mit dem Vorwärtsverweis VW markiert und die Vorwärtsverweisadresse VWA eingetragen. Wird jedoch festgestellt, daß das Objekt Do alt genug ist, also mehrere Bereinigungen bereits überstanden hat, dann wird in einem Schritt A5 das zu sichernde lebende Objekt Do in den zweiten Speicherbereich OS unter einer Adresse ADO, und zwar im ersten Abschnitt ABSO eingetragen. Wiederum wird das kopierte Objekt im ersten Speicherbereich NS mit VW markiert und die Vorwärtsverweisadresse ADO eingeschrieben. Schließlich wird die Adresse ADO auch im Register R vermerkt.

Die Frage, ob ein Objekt Do alt genug ist oder nicht, ergibt sich bei der Ausführungsform der Figur 4 und Figur 5 mit Hilfe der Aufteilung des ersten Speicherbereiches NS. Im Ausführungsbeispiel sind hier zwei Teilspeicher CA und PSS und ein zur Sicherung verwendeter Speicher FSS vorgesehen. Ein neues Objekt gelangt zunächst in den ersten Teilspeicher CA. Nach der ersten Bereinigung wird das Objekt in den zweiten Teilspeicher FSS geschrieben. Nach Beendigung der Bereinigung wird der dritte Teilspeicher PSS mit dem zweiten Teilspeicher FSS vertauscht. Somit sind alle eine Bereinigung überlebende Objekte Do im dritten Teilspeicher PSS enthalten. Bei der nächsten Bereinigung werden wiederum die neuen Objekte in den ersten Teilspeicher CA geschrieben und lebende von dort in den zweiten Teilspeicher FSS umkopiert. Objekte, die dagegen im dritten Teilspeicher PSS enthalten sind, werden bei der nächsten Bereinigung im zweiten Speicherbereich OS gesichert, und dort zunächst in den ersten Abschnitt ABSO1 im Teilspeicher OSN geschrieben. Bevor also ein Objekt in den zweiten Speicherbereich gelangt, muß es zwei Bereinigungen überlebt haben.

Die Frage, ob ein Objekt Do alt genug ist, kann auch auf andere Weise entschieden werden, z.B. wie es in Figur 6 und 7 dargestellt ist. Hier wird eine änderbare Grenzadresse GR festgelegt, die entscheidet, ob ein Objekt alt genug ist oder nicht alt genug ist. Da die Objekte nacheinander in den ersten Teilspeicher CA eingespeichert werden, sind die Objekte, deren Adresse kleiner als GR ist, länger im ersten Teilspeicher gegenüber Objekten, deren Adresse höher als GR ist. Dementsprechend können die Objekte, die oberhalb von GR liegen, in den zweiten Speicherbereich OS kopiert werden, während die Objekte, die unterhalb von GR liegen, in den zweiten Teilspeicher FSS umkopiert werden. Durch entsprechende Anordnung der Grenzadresse GR kann festgelegt werden, ob ein Objekt frühzeitig in den zweiten Speicherbereich gelangt oder erst viel später.

Nach der Bereinigung, d.h. nachdem alle Register R überprüft worden sind, stehen die lebenden Objekte, die aus dem ersten Teilspeicher CA kommen im ersten Abschnitt ABSN1 des zweiten Teilspeichers FSS und alle lebenden Objekte, die aus dem dritten Teilspeicher PSS kommen im ersten Abschnitt ABSO1 des zweiten Speicherbereiches OS, im Teilspeicher OSN (1. Ausführungsbeispiel).

Entsprechend der ersten Phase gemäß Figur 10 wird auch der Erinnerungsspeicher behandelt. Dies ergibt sich aus Figur 11. Der Erinnerungsspeicher enthält Einträge, die angeben, ob Verweise von einem Objekt im zweiten Speicherbereich OS zu einem Objekt im ersten Speicherbereich NS zeigen. Wenn dies der Fall ist, dann kann z.B. die Adresse des Objektes im zweiten Speicherbereich OS in den Erinnerungsspeicher RS eingetragen werden, über die dann das Objekt im ersten Speicherbereich NS adressierbar ist. Der Erinnerungsspeicher wird somit wie ein Register R behandelt. Dementsprechend sind die einzelnen Schritte vergleichbar mit denen der Figur 10.

Für jeden Eintrag oder jede Stelle RSI im Erinnerungsspeicher RS wird untersucht, ob ein Verweis auf ein Objekt im ersten Speicherbereich NS gegeben ist. Wenn dies der Fall ist, wird in einem zweiten Schritt D2 überprüft, ob das Objekt Do im ersten Speicherbereich NS einen Vorwärtsverweis VW enthält. Ist dies der Fall, dann wird die Vorwärtsverweisadresse VWA in die Stelle RSE des Erinnerungsspeichers geschrieben (D6a). Weiterhin wird festgestellt, ob das Objekt Do bereits im zweiten Speicherbereich OS steht. Ist dies der Fall, dann wird der Eintrag in der Stelle RSE gelöscht (Schritt D6b). Die Schritte D4 und D5 sind sehr ähnlich den Schritten A4 und A5, bei D4 fehlt der letzte Schritt von A4, während bei D5 anstatt des letzten Schrittes bei A5 angegeben ist, daß der Eintrag an der Stelle RSE im Erinnerungsspeicher RS gelöscht wird.

In der zweiten Phase des Bereinigungsverfahrens wird nun untersucht, ob es Verweise von Objekten Do aus dem zweiten Teilspeicher FSS in andere Teilspeicher des ersten Speicherbereiches NS gibt. Auf die über den Verweis adressierten Objekte z.B. in CA und PSS kann auf diese Objekte zugegriffen werden, und zwar über das Objekt im zweiten Teilspeicher FSS. Der Ablauf ist im Ablaufdiagramm der Figur 12 dargestellt. In einem Schritt B1 wird für jedes Objekt Do im Abschnitt ABSN1 des zweiten Teilspeichers FSS festgestellt, ob unter der Adresse AD die Adresse eines Objektes Do in den anderen Teilspeichern des ersten Speicherbereiches NS enthalten ist. Ist dies der Fall, dann wird in einem Schritt B2 wieder überprüft, ob das Objekt Do in CA oder PSS ein Vorwärtsverweis VW enthält und für diesen Fall in einem Schritt B6 die Vorwärtsverweisadresse VWA in das Datenobjekt unter der Adresse AD im ersten Abschnitt ABSN1 eingetragen. Ergibt die Überprüfung im Schritt B2 jedoch, daß das Objekt Do in CA bzw. PSS keinen Vorwärtsverweis enthält, wird als nächstes überprüft, ob das Objekt Do alt genug ist. Wenn dies nicht der Fall ist, dann wird im Schritt B4 das Objekt Do in den nächsten Abschnitt ABSN2 des zweiten Teilspeichers FSS kopiert, ein Vorwärtsverweis VW in das Objekt Do unter der Adresse ADN eingetragen und die Adresse ADneu im Abschnitt ABSN2 als Vorwärtsverweisadresse VWA in das Objekt im Teilspeicher CA bzw. PSS eingetragen.

Wenn das Objekt Do alt genug ist, dann wird im Schritt B5 dieses Do in den Abschnitt ABSO1 des zweiten Speicherbereiches OS kopiert unter der Adresse ADO, ADO als Vorwärtsverweisadresse in das Objekt unter ADN im ersten Speicherbereich NS eingetragen und das Objekt mit VW markiert.

Die Frage, ob Do alt genug ist (Schritt B3), wird im Ausführungsbeispiel der Figur 4 in Abhängigkeit der Lage des Objektes in CA bzw. PSS entschieden. Wenn das adressierte Objekt im ersten Teilspeicher CA liegt, dann wird es als lebendes Objekt in den zweiten Abschnitt ABSN2 des zweiten Teilspeichers FSS kopiert. Wenn es im dritten Teilspeicher PSS liegt, dann wird es in den zweiten Speicherbereich OS ko piert. Werden dagegen entsprechend Figur 6 Grenzadressen zur Unterscheidung von alten und jungen Objekten verwendet, dann wird aufgrund der Lage des Objektes zur Grenzadresse GR die Entscheidung getroffen.

Diese zweite Phase wird nun solange wiederholt, bis kein Abschnitt ABSN für ein neues lebendes Objekt geschaffen werden muß.

Die Sicherung von Objekten Do im zweiten Speicherbereich OS kann zum Ergebnis haben, daß nunmehr Objekte Do im zweiten Speicherbereich OS liegen, die einen Verweis auf ein Objekt im ersten Speicherbereich NS enthalten. Wenn dies der Fall ist, dann müssen die entsprechenden Objekte im ersten Speicherbereich NS gesichert werden. Das Verfahren, nach dem dies abläuft, ergibt sich aus Figur 13.

Für jedes Objekt im ersten Abschnitt ABSO1 des Teilspeichers OSN des zweiten Speicherbereiches OS wird untersucht, ob das unter der Adresse ADO liegende Objekt einen Verweis auf ein Objekt im ersten Speicherbereich NS unter der Adresse ADN enthält (Schritt C1).

Ist dies der Fall, dann wird untersucht, ob das Objekt im ersten Speicherbereich NS einen Vorwärtsverweis VW enthält. Ist dies gegeben, dann wird die Vorwärtsverweisadresse VWA vom Objekt im ersten Speicherbereich NS in das Objekt im zweiten Speicherbereich unter der Adresse ADO eingeschrieben. In diesem Falle ist das Objekt Do im ersten Speicherbereich NS bereits gesichert worden. Die Vorwärtsverweisadresse VWA gibt dann an, wo dieses Objekt jetzt steht. Im nächsten Schritt C6b wird anschließend noch überprüft, ob das adressierte Objekt noch nicht im zweiten Speicherbereich OS steht. Ist dies der Fall, dann wird in den Erinnerungsspeicher RS ein neuer Eintrag vorgenommen, und zwar dort die Adresse ADO eingetragen.

Enthält das Objekt im ersten Speicherbereich keinen Verweis VW, dann wird überprüft, ob das Objekt alt genug ist (Schritt C3). Ist es nicht alt genug, dann wird das Objekt in den nächsten Abschnitt ABSN unter der Adresse AD gesichert, in das Objekt als Vorwärtsverweisadresse die Adresse AD geschrieben und das Objekt VW markiert. Ebenso wird in den Erinnerungsspeicher RS ein neuer Eintrag eingeschrieben, und zwar die Adresse ADO des adressierenden Objektes im zweiten Speicherbereich OS.

Ist das Objekt Do dagegen alt genug, dann wird gemäß Schritt C5 das Objekt in den zweiten Speicherbereich OS und zwar in den nächsten Abschnitt ABNO eingeschrieben, ADO neu in das Objekt unter ADN als Vorwärtsverweisadresse eingetragen und dieses markiert mit einem Vorwärtsverweis VW. Da das Objekt aus dem ersten Speicherbereich NS in den zweiten Speicherbereich OS umkopiert worden ist, werden der entsprechende Eintrag im Erinnerungsspeicher RS gelöscht.

Die Feststellung, ob das Objekt Do alt genug ist, erfolgt wiederum entweder entsprechend der Lage des Objektes in CA oder PSS oder entsprechend einer Grenzadresse, die neu festgesetzt werden kann. Wird das Ausführungsbeispiel der Figur 4 verwendet, dann werden Objekte, die im ersten Teilspeicher CA liegen, in dem zweiten Teilspeicher FSS gesichert, während Objekte, die im dritten Teilspeicher PSS liegen, im zweiten Speicherbereich gesichert werden.

Es ist zweckmäßig, daß in der zweiten Phase die Untersuchung, ob ein Objekt eines Verweis auf ein anderes Objekt im ersten Speicherbereich NS enthält abwechselnd einmal im ersten Speicherbereich und dann im zweiten Speicherbereich durchgeführt wird. Zunächst wird dann im ersten Speicherbereich der zweite Teilspeicher FSS im ersten Abschnitt ABSN1 untersucht auf Verweise auf die übrigen Teilspeicher im ersten Speicherbereich NS. Lebende Objekte im Teilspeicher CA werden in den zweiten Abschnitt ABSN2 des zweiten Teilspeichers FSS kopiert. Lebende Objekte im dritten Teilspeicher PSS werden in den zweiten Speicherbereich OS umkopiert, und zwar im ersten Abschnitt ABSO1. Anschließend, nachdem der erste Abschnitt ABSN1 durchsucht worden ist, wird der erste Abschnitt ABSO1 des zweiten Speicherbereiches OS nach Verweisen auf Objekte im ersten Speicherbereich NS untersucht. Existieren derartige Verweise, dann werden lebende Objekte aus dem Teilspeicher CA in den zweiten Abschnitt ABSN2 kopiert, während lebende Objekte im dritten Teilspeicher PSS in den zweiten Abschnitt ABSNO2 des zweiten Speicherbereiches OS gesichert werden. Wenn der erste Abschnitt ABSO1 vollständig durchsucht worden ist, wird dasselbe Spiel mit dem zweiten Abschnitt ABSN2 des ersten Speicherbereiches durchgeführt. Dies erfolgt abwechselnd solange, bis bei der Durchsuchung keine lebenden Objekte mehr gefunden werden und somit keine neuen Abschnitte ABSN bzw. ABSO eröffnet werden müssen. Wenn dies gegeben ist, ist die Feststellung von lebenden Objekten im ersten Speicherbereich und deren Sicherung entweder im zweiten Teilspeicher FSS oder im zweiten Speicherbereich unter OSN beendet.

Jetzt kann gemäß Figur 5 der Inhalt des zweiten Teilspeichers FSS in den dritten Teilspeicher PSS umkopiert werden und der zweite Teilspeicher FSS wieder freigegeben werden. Somit stehen im Teilspeicher PSS diejenigen Objekte, die eine Bereinigung überlebt haben, aber noch nicht alt genug sind, um in den zweiten Speicherbereich OS kopiert zu werden. Der Teilspeicher CA wird dem System freigegeben.

Im zweiten Ausführungsbeispiel (Fig.6,7) gilt entsprechendes, hier wird der Inhalt des zweiten Teilspeichers FSS in den ersten Teilspeicher CA umkopiert und die Grenzadresse GR neu gelegt. Diese kann jetzt so gelegt werden, daß sie unterhalb der Objekte liegt, die vom zweiten Teilspeicher FSS in den ersten Teilspeicher CA umkopiert worden sind. Es ist jedoch auch möglich, die Grenzadresse GR höher zu wählen, z.B. so wie es in Figur 7 als punktierte Linie GR′ dargestellt ist. Entsprechend der Anordnung der Grenzadresse werden dann ältere oder weniger alte Objekte in den zweiten Speicherbereich OS zur Sicherung kopiert.

Wenn sich ergibt, daß die zur Sicherung in den zweiten Speicherbereich OS und zwar in den ersten Teilspeicher OSN kopierten Objekte den ersten Teilspeicher OSN gefüllt haben, dann muß der zweite Speicherbereich OS ebenfalls bereinigt werden. Dazu kann das Stop- und Copy- Verfahren verwendet werden. Es wird also festgestellt, welche Objekte im ersten Teilspeicher OSN noch leben, also noch adressiert werden können. Dazu können die außerhalb des Teilspeichers OSN liegenden Einheiten, wie Register, Stack-Speicher oder Erinnerungsspeicher RS untersucht werden. Über diese äußeren Einheiten gefundenen Objekte werden aus dem ersten Teilspeicher OSN in den zweiten Teilspeicher OSK des zweiten Speicherbereiches umkopiert. Weiterhin wird untersucht, ob es Verweise aus dem ersten Speicherbereich NS in den ersten Teilspeicher OSN gibt. Derart adressierte Objekte werden als lebende Objekte ebenfalls in den zweiten Teilspeicher OSK kopiert. Nachdem alle lebenden Objekte im zweiten Teilspeicher OSK gesichert worden sind, werden die zwei Teilspeicher OSK und OSN getauscht, so daß jetzt die lebenden Objekte wiederum im ersten Teilspeicher OSN stehen, aber dabei nicht den gesamten Speicherraum im ersten Teilspeicher umfassen. Das heißt es können wiederum neue Objekte aus dem ersten Speicherbereich in den zweiten Speicherbereich gesichert werden. Der zweite Teilspeicher OSK wird dagegen wieder freigegeben.

Der Erinnerungsspeicher RS kann z.B. als Registersatz realisiert sein, er kann aber auch im Speicher selbst stehen. Weiterhin ist es möglich, daß das Bereinigungsverfahren dazu führt, daß die gewählten Grenzen der Teilspeicher, also z.B. FSS oder PSS nicht ausreichend sind. Dann können diese Teilspeicher erweitert werden durch Verwendung von freien Speicherbereichen im Speicher. Die Adressen dieser weiteren Teilspeicher können wiederum im Organisationsteil ORG gemäß Figur 8 eingespeichert werden.

Die Anordnung der einzelnen Speicherbereiche kann der Figur 8 als Beispiel entnommen werden. Auf den Organisationsteil ORG, in dem die Anfangs- und Endeadressen stehen, kann der erste Speicherbereich NS folgen mit der Anfangsadresse NS-A und der Endadresse NS-E. Der erste Speicherbereich NS kann unterteilt sein in einen ersten Teilspeicher CA mit der Anfangsadresse CA-A und der Endadresse CA-E. Darauf kann ein zweiter Teilspeicher FSS folgen mit der Anfangsadresse FS-A und der Endadresse FS-E. Hierauf folgt dann der dritte Teilspeicher PSS mit der Anfangsadresse PSS-A und der Endadresse PSS-E. Die Endadresse PSS-E ist ebenfalls die Endadresse NSS-E des ersten Speicherbereiches NS. Darauffolgen kann der zweite Speicherbereich OS angeordnet werden mit der Anfangsadresse OS-A und der Endadresse OS-E. Dieser zweite Speicherbereich OS kann ebenfalls unterteilt sein in einen ersten Teilspeicher OSN und einen zweiten Teilspeicher OSK. Der erste Teilspeicher OSN hätte dann die Anfangsadresse OSN-A und die Endadresse OSN-E. Der zweite Teilspeicher OSK hätte die Anfangsadresse OSK-A und die Endadresse OSK-E, die gleichzeitig die Endadresse OS-E des zweiten Speicherbereichs OS darstellt. Im Speicher können dann noch weitere Bereiche für andere Zwecke reserviert werden, z.B. kann der Erinnerungsspeicher RS im Speicher enthalten sein, ebenso ist es möglich, den Stack-Speicher dort zu realisieren. Freie Speicherbereiche können für Erweiterungen des Teilspeichers FSS verwendet werden.

## Ansprüche

1. Verfahren zur Bereinigung eines Speichers von Objekten, auf die während eines Programmlaufs nicht mehr zugegriffen werden kann mit den Schritten:

a) der Speicher (SP) wird in mindestens einen ersten Speicherbereich (NS) eingeteilt und dieser in mindestens zwei Teilspeicher (CA, FSS) unterteilt, von denen der erste Teilspeicher (CA) zur Aufnahme von neuen Objekten (Do) verwendet wird, der andere Teilspeicher (FSS) zur Sicherung von festgestellten zugreifbaren, lebenden Objekten (Do) aus dem ersten Teilspeicher (DA) verwendet wird,

b) in einer ersten Phase der Bereinigung werden nacheinander alle die Objekte (Do) des ersten Speicherbereichs (NS) als lebende Objekte festgestellt, die von außerhalb des Speicherbereichs liegenden Objekten adressiert werden, diese lebenden Objekte werden in einen ersten Abschnitt (ABSN) des zweiten Teilspeichers (FSS) kopiert, die kopierten Objekte an der früheren Speicherstelle mit einem Vorwärtsverweis (VW) markiert, wobei bereits markierte Objekte nicht kopiert werden,

c) in einer zweiten Phase werden nacheinander alle Objekte des ersten Abschnitts (ABSN1) des zweiten Teilspeichers (FSS) dahingehend untersucht, ob diese Objekte andere Objekte im ersten Speicherbereich außerhalb des zweiten Teilspeichers (FSS) adressieren und diese adressierten Objekte werden als lebende Objekte in einen zweiten Abschnitt (ABSN2) des zweiten Teilspeichers (FSS) kopiert, die kopierten Objekte werden in ihren alten Speicherstellen in einem Vorwärtsverweis (VW) markiert, wobei bereits markierte Objekte nicht markiert werden,

d) in den weiteren Phasen werden jeweils die Objekte des zuletzt geschaffenen Abschnitts (ABSN) des zweiten Teilspeichers (FSS) entsprechend Schritt c) bearbeitet bis keine lebenden Objekte mehr gefunden werden,

e) nur die in den zweiten Teilspeicher (FSS) kopierten lebenden Objekte überleben die Speicherbereinigung, die anderen Objekte können überschrieben werden.

2. Verfahren nach Anspruch 1, dadurch **gekennzeichnet,** daß die lebenden Objekte des zweiten Teilspeichers (FSS) in den ersten Teilspeicher (CA) umkopiert werden und der zweite Teilspeicher gelöscht wird.

3. Verfahren nach Anspruch 2, dadurch **gekennzeichnet,** daß ein zweiter Speicherbereich (OS) vorgesehen wird, in dessen Abschnitte (ABSO) lebende Objekte vom ersten Speicherbereich (NS) kopiert werden, wenn diese Objekte mindestens eine Bereinigung im ersten Speicherbereich überlebt haben.

4. Verfahren nach Anspruch 3, dadurch **gekennzeichnet,** daß im ersten Speicherbereich (NS) im ersten Teilspeicher (CA) jeweils eine Grenzadresse (GR) festgelegt wird, ab der lebende Objekte bei der Bereinigung in den zweiten Teilspeicher (FSS) kopiert werden und vor der lebende Objekte in den zweiten Speicherbereich (OS) kopiert werden.

5. Verfahren nach Anspruch 3, dadurch**gekennzeichnet,** daß im ersten Speicherbereich (NS) ein dritter Teilspeicher (PSS) vorgesehen wird, in den jeweils bei der Bereinigung die lebenden Objekte aus dem zweiten Teilspeicher (FSS) kopiert werden und daß bei folgenden Bereinigungen sowohl der erste als auch der dritte Teilspeicher (CA, PSS) auf lebende Objekte durchsucht werden, wobei festgestellte lebende Objekte aus dem ersten Teilspeicher (CA) in den zweiten Teilspeicher (FSS) kopiert werden, festgestellte lebende Objekte im dritten Teilspeicher (PSS) in den zweiten Speicherbereich (OS) kopiert werden.

6. Verfahren nach Anspruch 5, dadurch **gekennzeichnet,** daß der zweite Speicherbereich (OS) auf solche Objekte untersucht wird, die Objekte im ersten Speicherbereich (NS) adressieren, daß derart im ersten Speicherbereich festgestellte lebende Objekte in einen neuen Abschnitt (ABSN) des zweiten Teilspeichers (FSS) kopiert werden, wenn sie im ersten Teilspeicher (CA) des ersten Speicherbereiches liegen, dagegen in einen neuen Abschnitt (ABSO) des zweiten Speicherbereichs (OS) kopiert werden, wenn sie im dritten Teilspeicher (PSS) des ersten Speicherbereiches (NS) liegen, wobei kopierte Objekte an der früheren Speicherstelle mit einem Vorwärtsverweis (VW) markiert werden, bereits markierte Objekte dagegen nicht kopiert werden.

7. Verfahren nach Anspruch 4, dadurch **gekennzeichnet,** daß der zweite Speicherbereich auf solche Objekte untersucht wird, die Objekte im ersten Speicherbereich adressieren, daß derart im ersten Speicherbereich festgestellte lebende Objekte in einen neuen Abschnitt (ABSN) des zweiten Teilspeichers (FSS) kopiert werden, wenn sie unterhalb der Grenzadresse (GR) liegen, dagegen in einen neuen Abschnitt (ABSO) des zweiten Speicherbereiches (OS) kopiert werden, wenn sie oberhalb der Grenzadresse (GR) liegen, wobei kopierte Objekte an der früheren Speicherstelle mit einem Vorwärtsverweis (VW) markiert werden, bereits markierte Objekte dagegen nicht kopiert werden.

8. Verfahren nach Anspruch 6 oder 7,
dadurch **gekennzeichnet,**
daß in auf die erste Phase folgenden Phasen abwechselnd die neuen Abschnitte (ABSN) des zweiten Teilspeichers (FSS) des ersten Speicherbereiches (NS) und die neuen Abschnitte (ABSO) des zweiten Speicherbereiches (OS) auf Adressen von Objekten im ersten Speicherbereich (NS) untersucht werden und lebende Objekte entweder in einen Abschnitt (ABSN) des ersten Speicherbereichs (NS) oder in einen Abschnitt (ABSO) des zweiten Speicherbereiches umkopiert werden und dies solange durch geführt wird, bis bei der Bearbeitung eines Abschnittes im ersten bzw. zweiten Speicherbereich keine lebenden Objekte mehr gefunden werden.

9. Verfahren nach Anspruch 8,
dadurch **gekennzeichnet,**
daß bei Feststellung einer Adresse bei einem Objekte im zweiten Speicherbereich (OS), die auf ein Objekt im ersten Speicherbereich (NS) zeigt, die Adressen dieser Objekte im zweiten Speicherbereich (OS) in einen Erinnerungsspeicher (RS) abgespeichert werden und dieser Eintrag solange aufrechterhalten bleibt bis das lebende Objekt vom ersten Speicherbereich (NS) in den zweiten Speicherbereich (OS) kopiert wird.

10. Verfahren nach Anspruch 9,
dadurch **gekennzeichnet,**
daß in der ersten Phase auch der Erinnerungsspeicher (RS) auf Einträge untersucht wird und bei Vorliegen eines Eintrages das adressierte Objekte im zweiten Speicherbereich (OS) dahingehend untersucht wird, ob dieses eine Adresse eines Objektes im ersten Teilspeicher (CA) im ersten Speicherbereich (NS) aufweist und für diesen Fall das im ersten Teilspeicher (CA) gefundene Objekt in den zweiten Teilspeicher (FSS) kopiert und dieses Objekt im ersten Teilspeicher (CA) mit einem Vorwärtsverweis (VW) markiert, sonst das gefundene Objekt im dritten Teilspeicher (PSS) in den zweiten Speicherbereich (OS) kopiert und den Eintrag im Erinnerungsspeicher (RS) gelöscht wird.

11. Verfahren nach einem der Ansprüche 3 bis 10,
dadurch **gekennzeichnet,**
daß der zweite Speicherbereich (OS) einen zweiten Teilspeicher (OSK) enthält, daß bei einer Bereinigung des zweiten Speicherbereiches (OS) im ersten Teilspeicher (OSN) gefundene lebende Objekte zur Sicherung in den zweiten Teilspeicher (OSK) kopiert werden und nach Beendigung der Sicherung der lebenden Objekte die gesicherten Objekte in den ersten Teilspeicher (OSN) umkopiert werden, dagegen die Speicherstellen mit nicht lebenden Objekten im ersten Teilspeicher frei gegeben werden.

12. Verfahren nach Anspruch 11,
dadurch **gekennzeichnet,**
daß bei der Bereinigung des zweiten Speicherbereiches (OS) auch der Erinnerungsspeicher (RS) angepaßt wird.

13. Verfahren nach einem der vorhergehenden Ansprüche,
dadurch **gekennzeichnet,**
daß bei Markierung eines Objektes mit einem Vorwärtsverweis (VW) in dieses Objekt (Do) eine Vorwärtsverweisadresse (VWA) eingetragen wird, die die Adresse angibt, zu der das Objekt (Do) kopiert worden ist.

14. Verfahren nach einem der vorhergehenden Ansprüche,
dadurch **gekennzeichnet,**
daß ein Objekt (Do) aus mehreren Datenwörtern bestehen kann und im Objekt (Do) ein Bereich enthalten ist, der die Anzahl der zusammengesetzten Datenwörter angibt.

FIG1

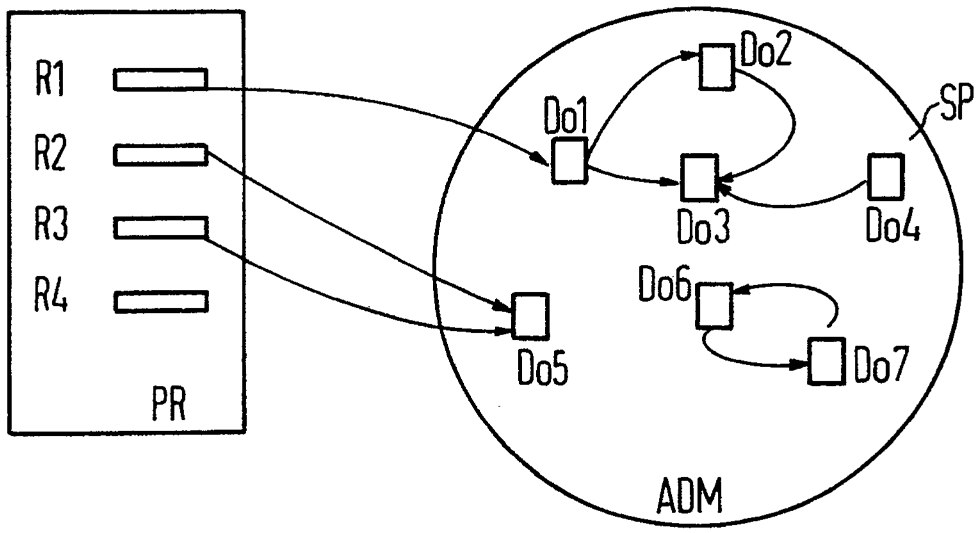


FIG2

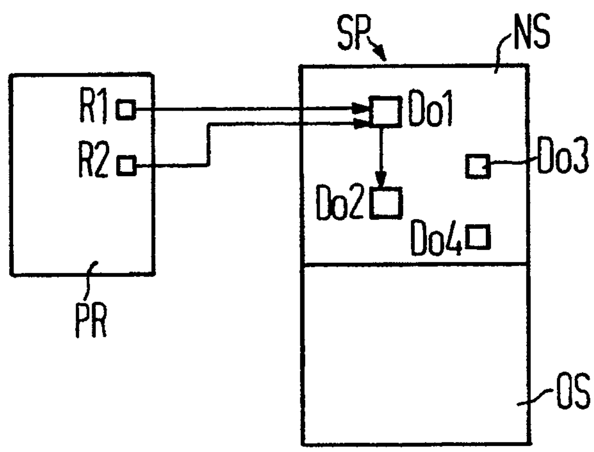


FIG3

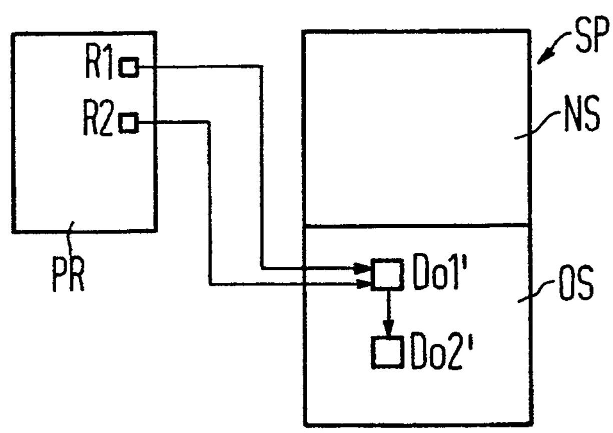

FIG 4

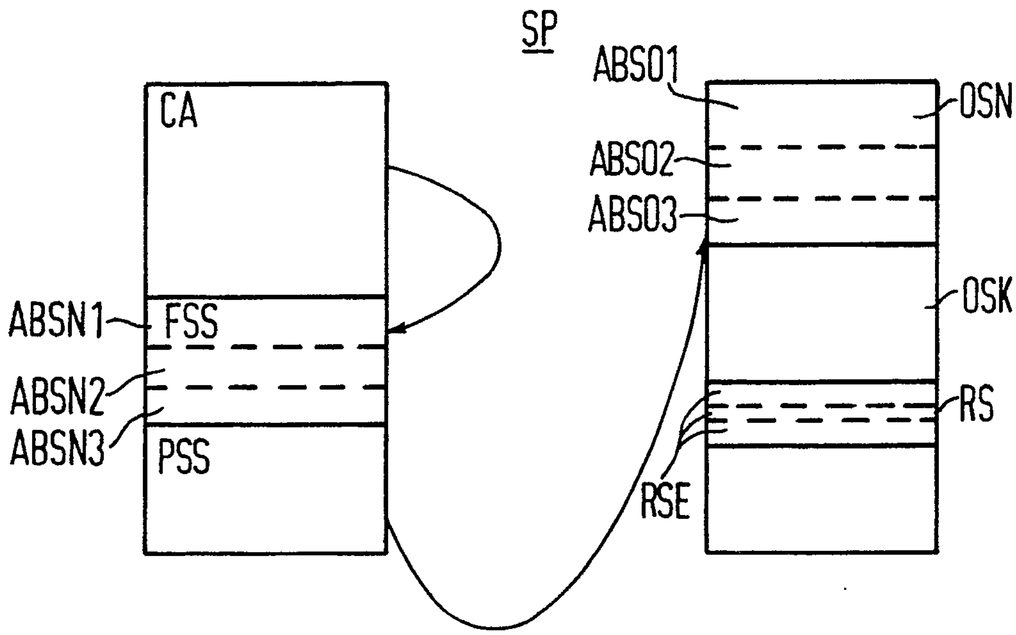
SP
CA
FSS
PSS
ABSN1
ABSN2
ABSN3
ABSO1
ABSO2
ABSO3
OSN
OSK
RS
RSE

FIG 5

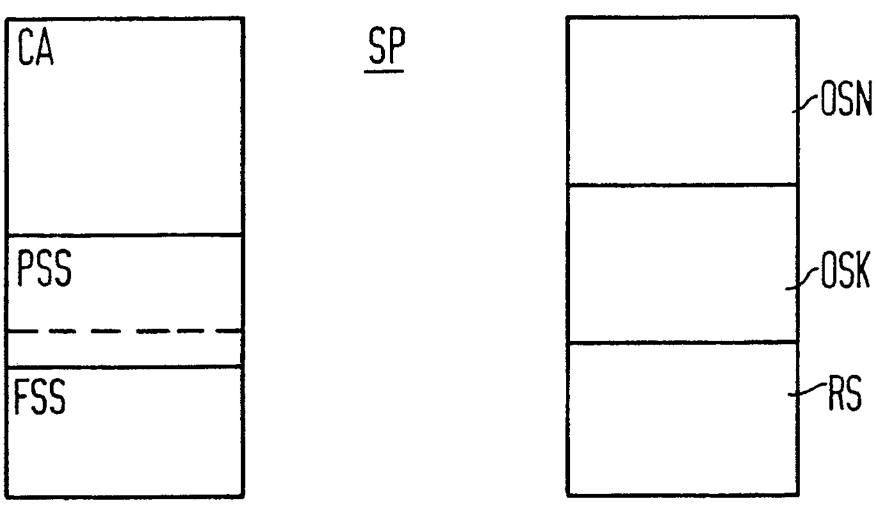
SP
CA
PSS
FSS
OSN
OSK
RS

FIG 6

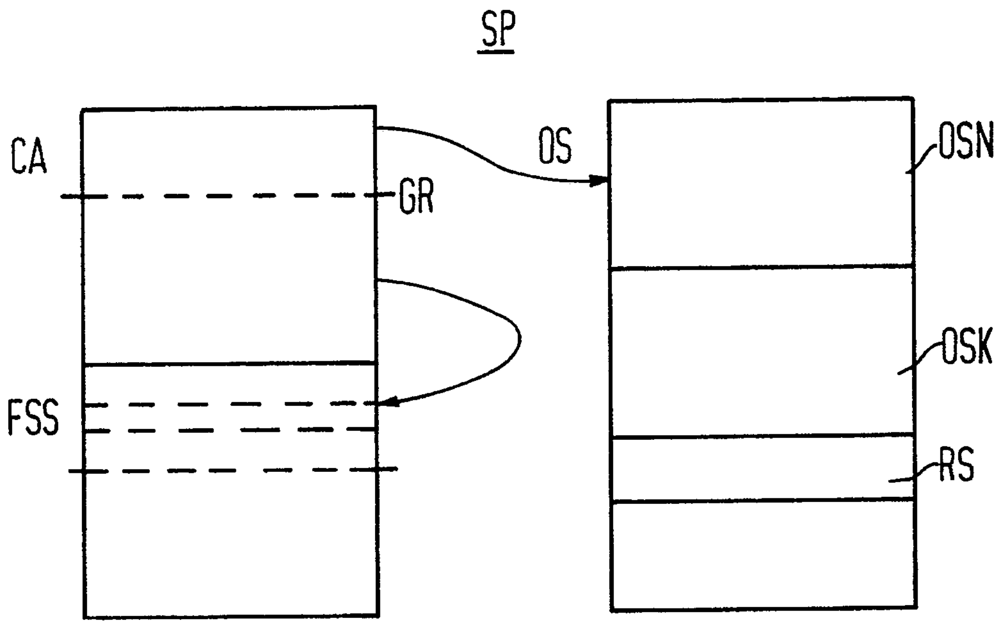


FIG 7

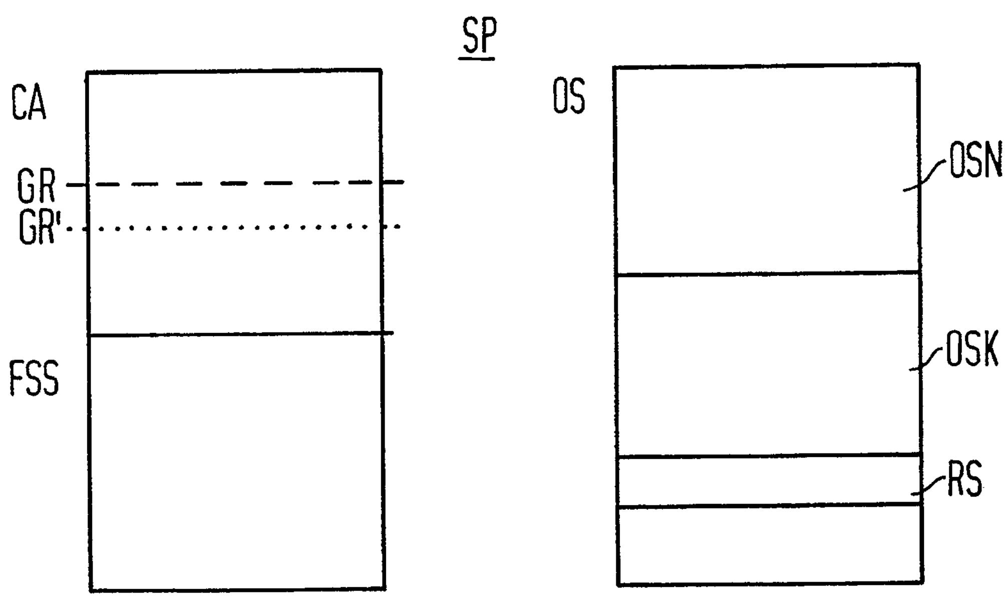

FIG 8

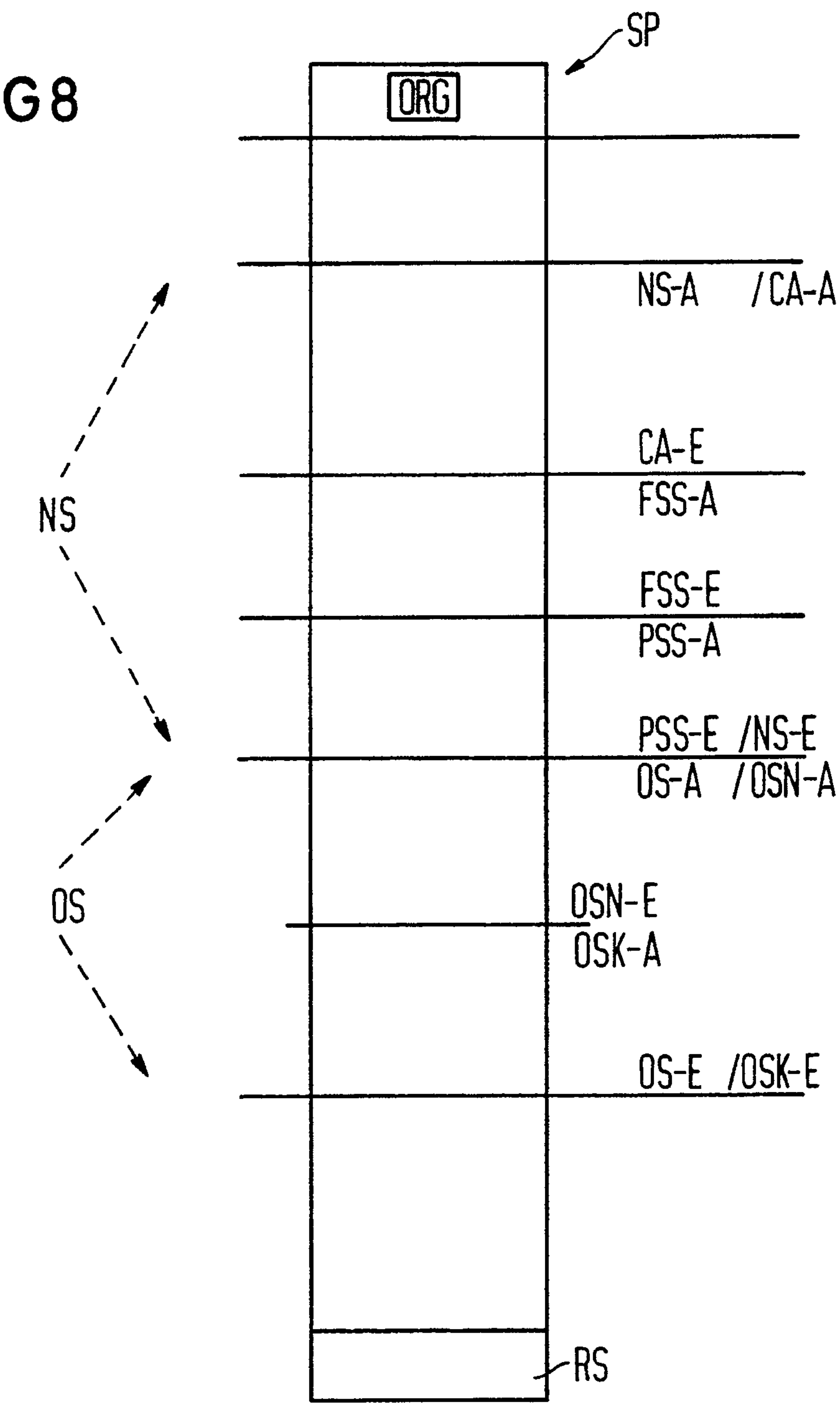
SP
ORG
NS-A /CA-A
CA-E
FSS-A
FSS-E
PSS-A
PSS-E /NS-E
OS-A /OSN-A
OSN-E
OSK-A
OS-E /OSK-E
NS
OS
RS

FIG 9

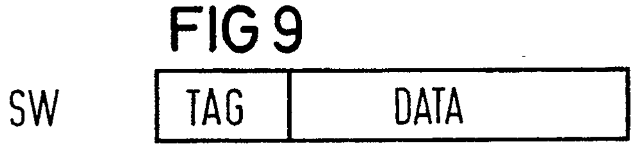
SW
TAG
DATA

FIG 10

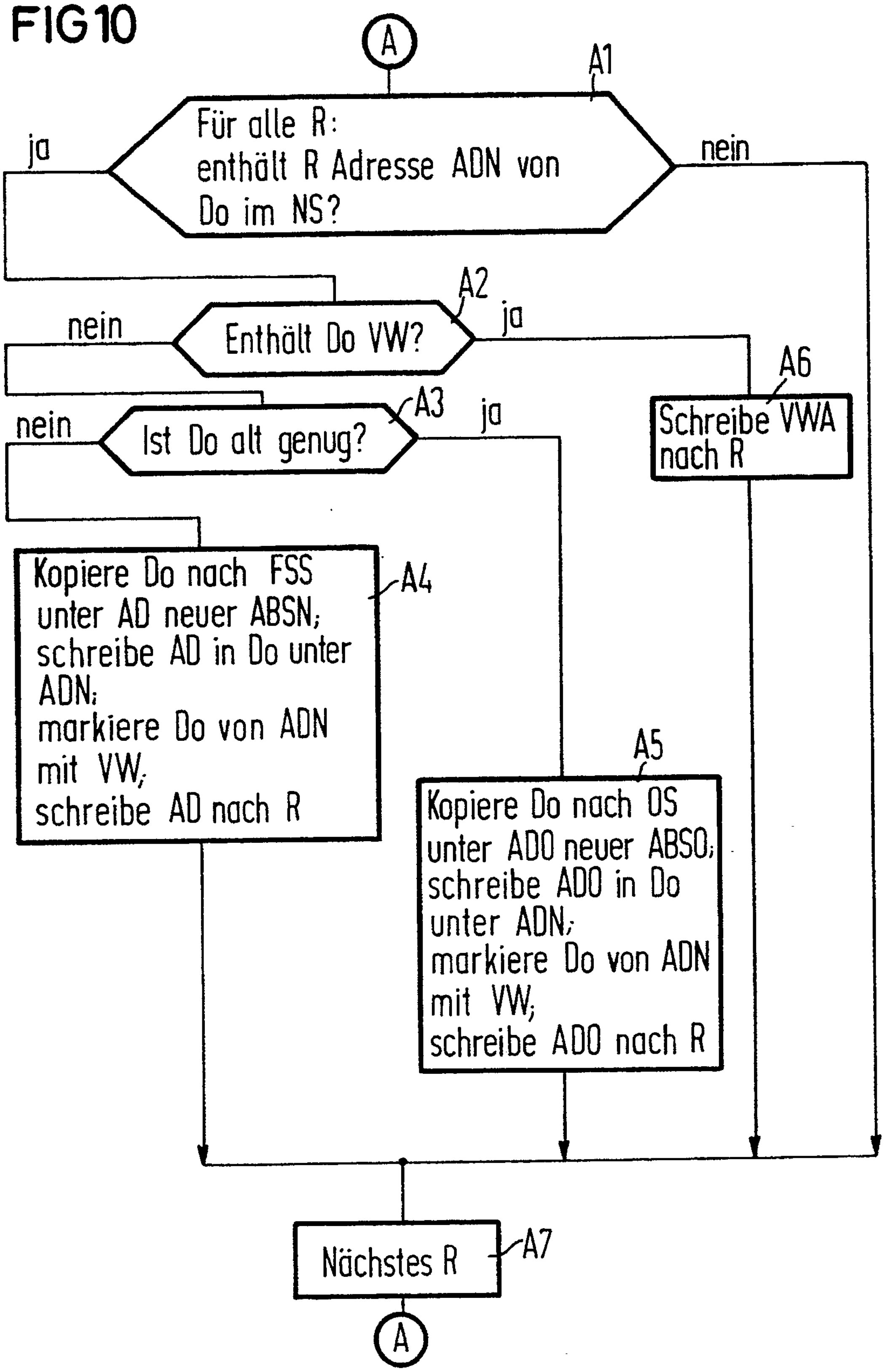
A
A1
Für alle R:
enthält R Adresse ADN von
Do im NS?
ja
nein
A2
Enthält Do VW?
nein
ja
A6
Schreibe VWA
nach R
A3
Ist Do alt genug?
nein
ja
Kopiere Do nach FSS
unter AD neuer ABSN;
schreibe AD in Do unter
ADN;
markiere Do von ADN
mit VW;
schreibe AD nach R
A4
A5
Kopiere Do nach OS
unter ADO neuer ABSO;
schreibe ADO in Do
unter ADN;
markiere Do von ADN
mit VW;
schreibe ADO nach R
Nächstes R
A7
A

FIG 11

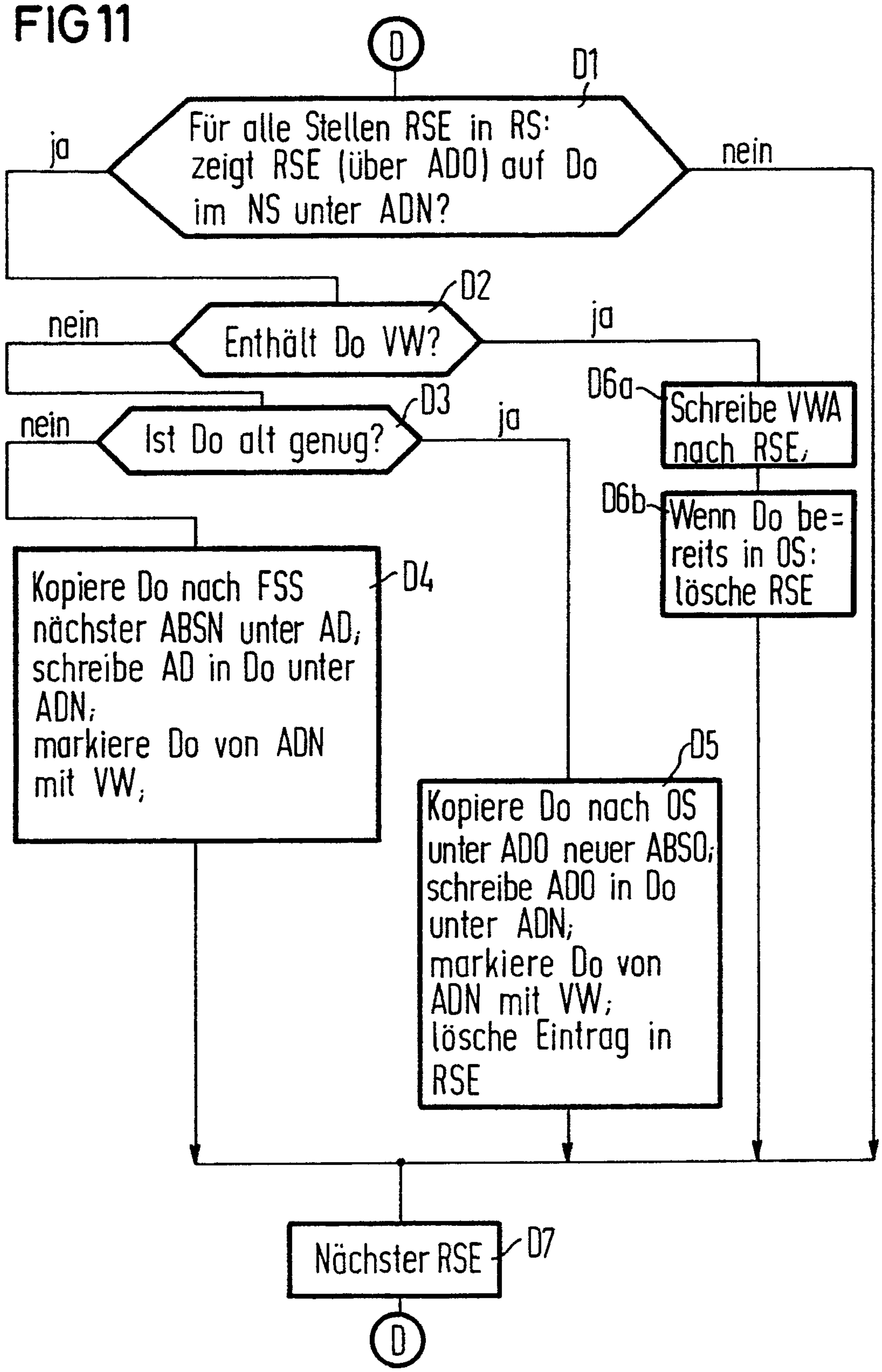
D
D1
Für alle Stellen RSE in RS: zeigt RSE (über ADO) auf Do im NS unter ADN?
ja
nein
D2
Enthält Do VW?
nein
ja
D3
Ist Do alt genug?
nein
ja
D6a
Schreibe VWA nach RSE;
D6b
Wenn Do be= reits in OS: lösche RSE
D4
Kopiere Do nach FSS nächster ABSN unter AD; schreibe AD in Do unter ADN; markiere Do von ADN mit VW;
D5
Kopiere Do nach OS unter ADO neuer ABSO; schreibe ADO in Do unter ADN; markiere Do von ADN mit VW; lösche Eintrag in RSE
Nächster RSE
D7
D

FIG 12

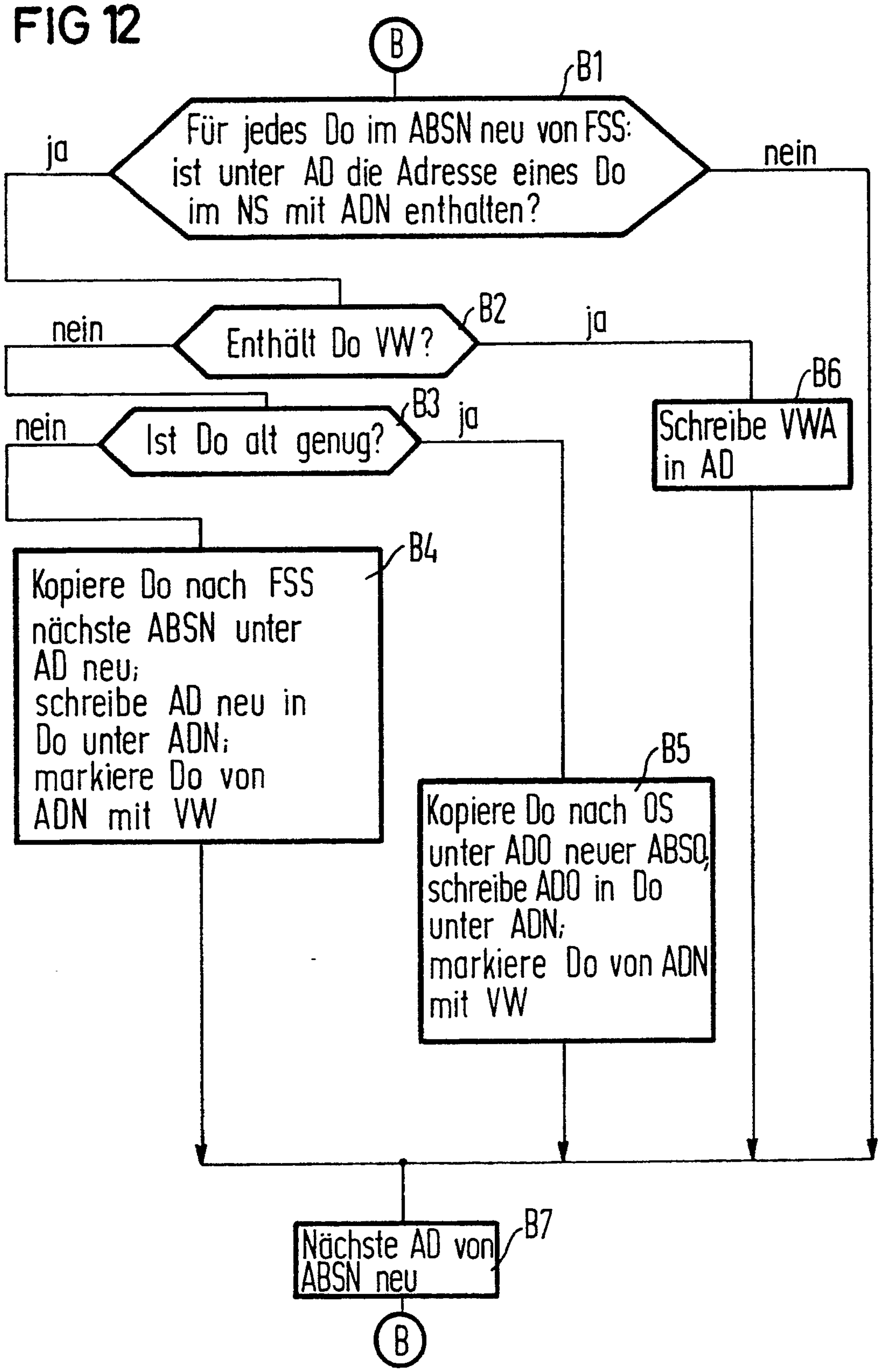
B
B1
Für jedes Do im ABSN neu von FSS: ist unter AD die Adresse eines Do im NS mit ADN enthalten?
ja
nein
B2
Enthält Do VW?
nein
ja
B3
Ist Do alt genug?
nein
ja
B4
Kopiere Do nach FSS nächste ABSN unter AD neu; schreibe AD neu in Do unter ADN; markiere Do von ADN mit VW
B5
Kopiere Do nach OS unter ADO neuer ABSO, schreibe ADO in Do unter ADN; markiere Do von ADN mit VW
B6
Schreibe VWA in AD
B7
Nächste AD von ABSN neu
B

FIG 13

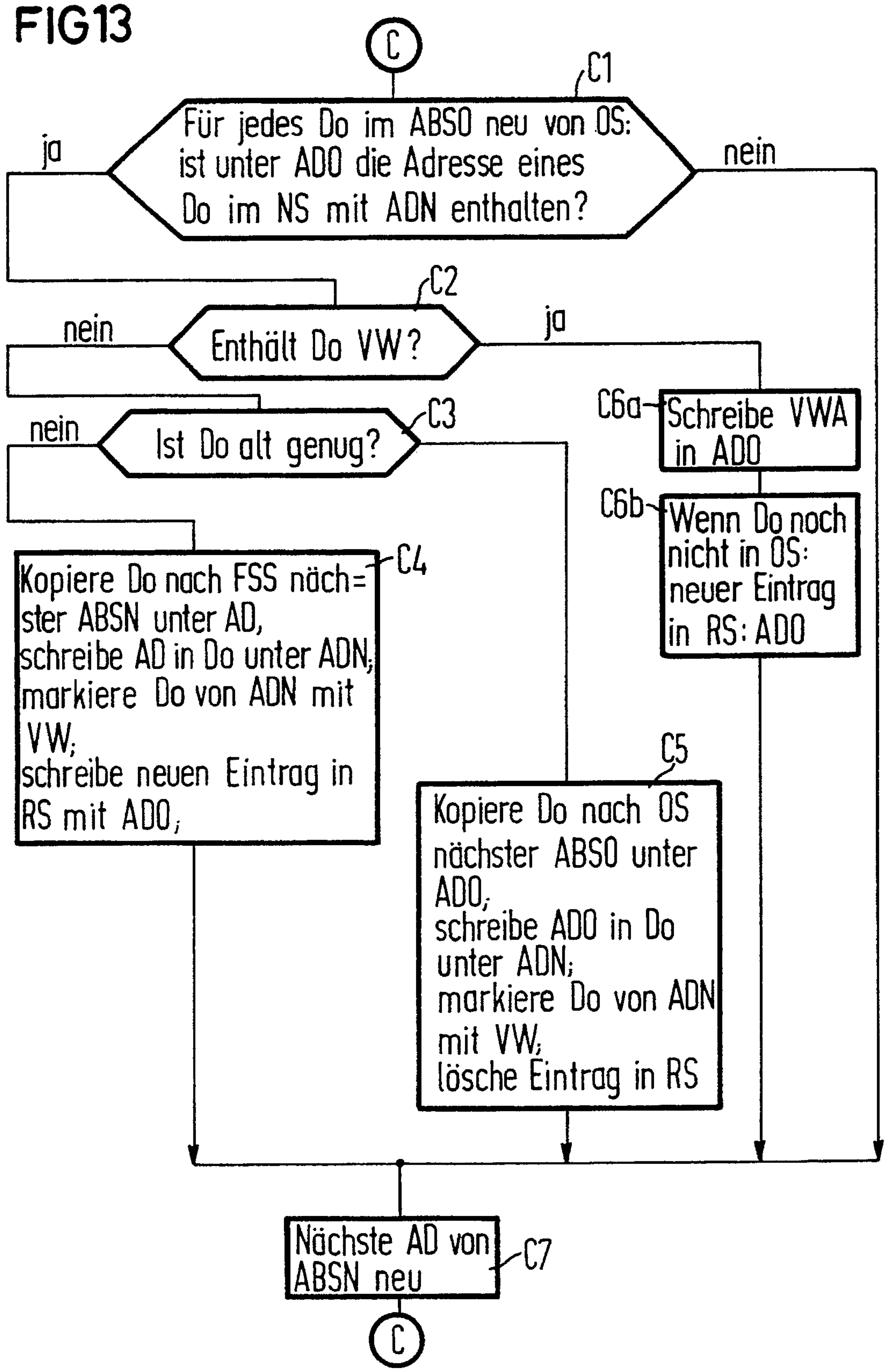
C
C1
Für jedes Do im ABSO neu von OS: ist unter ADO die Adresse eines Do im NS mit ADN enthalten?
ja
nein
C2
Enthält Do VW?
nein
ja
C3
Ist Do alt genug?
nein
C6a
Schreibe VWA in ADO
C6b
Wenn Do noch nicht in OS: neuer Eintrag in RS: ADO
C4
Kopiere Do nach FSS nächster ABSN unter AD, schreibe AD in Do unter ADN; markiere Do von ADN mit VW; schreibe neuen Eintrag in RS mit ADO;
C5
Kopiere Do nach OS nächster ABSO unter ADO; schreibe ADO in Do unter ADN; markiere Do von ADN mit VW; lösche Eintrag in RS
Nächste AD von ABSN neu
C7
C

Europäisches Patentamt

# EUROPÄISCHER RECHERCHENBERICHT

Nummer der Anmeldung

EP 89 12 3780

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 288 146 (HEWLETT-PACKARD) * Seite 3, Zeile 43 - Seite 4, Zeile 29; Seite 5, Zeile 42 - Seite 6, Zeile 43; Seite 17, Zeile 28 - Seite 18, Zeile 56; Abbildungen 6,7 * | 1-3,5 | G 06 F 12/02 |
| A | | 4,6-14 | |
| | --- | | |
| Y | US-A-4 807 120 (COURTS) * Seite 1, Zeilen 25-47; Seite 2, Zeilen 30-47; Seite 3, Zeilen 23-58; Seite 4, Zeile 14 - Seite 5, Zeile 17; Abbildungen 1,3 * | 1-3,5 | |
| | --- | | |
| A | COMMUNICATIONS OF THE ACM, Band 31, Nr. 9, September 1988, Seiten 1128-1138, ACM, New York, US; R. COURTS: "Improving locality of reference in a carbage-collecting memory management system" * Im ganzen * | 1 | |
| | ----- | | |

RECHERCHIERTE SACHGEBIETE (Int. Cl.5)

G 06 F 12/00

Der vorliegende Recherchenbericht wurde für alle Patentansprüche erstellt

| Recherchenort | Abschlußdatum der Recherche | Prüfer |
|---|---|---|
| DEN HAAG | 05-09-1990 | MASCHE C.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)